# EUROPEAN PATENT APPLICATION

(11) **EP 4 782 996 A1**
(43) Date of publication of application: **29.07.2026**
(21) Application number: 25227817.1
(22) Date of filing: 31.12.2025
(51) Int. Cl.: G06F 9/451, G06F 9/54

(54) **CROSS-PLATFORM INTERACTION METHOD AND SYSTEM OF DESKTOP SOFTWARE IN SOFTWARE PLATFORM**

(30) Priority: 23.01.2025 CN 202510105447; 15.05.2025 CN 202510628298
(71) Applicant: Shanghai Tosun Technology Ltd., Shanghai 201804 (CN)
(72) Inventor: Liu, Chu, Shanghai (CN); Xie, Yueyin, Shanghai (CN); Mo, Mang, Shanghai (CN)
(74) Representative: Sun, Yanan

(57) **Abstract**

A cross-platform interaction method of a desktop software in a software platform includes: a software platform is used as a server side to construct an independent host service process at the server side, wherein the host service process provides an HTTP service; the host service process displays a running interface of a desktop software in a position area of a sub-window of an interface framework set by the host service process; the host service process further sets a screen shot buffer zone for the sub-window to store a screen shot of the sub-window, and sends the screen shot to a client so that the screen shot is displayed and published by a webpage at the client; when the screen shot displayed by the webpage is triggered, the host service process receives a trigger behavior through the client to perform an operation of the running interface corresponding to the screen shot.

## Description

### CROSS-REFERENCE TO THE RELATED APPLICATIONS

This application is based upon and claims priority to Chinese Patent Application No. 202510105447.3 filed on January 23, 2025, and Chinese Patent Application No. 202510628298.9 filed on May 15, 2025, the entire contents of which are incorporated herein by reference.

### TECHNICAL FIELD

The present disclosure relates to software deployment technologies and in particular to a cross-platform interaction method and system of a desktop software in a software platform.

### BACKGROUND

The modern software platforms usually include multiple functional windows and user interfaces with different permissions. When joint simulation tasks are executed, the software platforms need to embed an interface of a joint simulation software into a sub-window of the platforms so as to realize unified management over these software life cycles. Besides, multiple users need to access the windows of the software platform through different platforms to perform different operations, such as viewing test reports by smart phone, modifying simulation model parameters by laptop computer, and modifying calibration parameters by on-board computer and the like. This requires the software platform to map and operate multiple windows at the same time on different platforms.

The current mainstream solution is to allow, by using a general remote control software, users to log onto the computer bearing the software platform remotely for viewing and operation. But this solution has the following disadvantages.
1. The logging requires the interface of the software platform to be in display state and display on top: this requirement leads the interface of the software platform to exclusively occupy the display, blocking other software running on desktop and affecting users' experience.
2. Interference of multiple users logging at the same time: in a case of multiple users logging at the same time, mutual interference occurs among mouse and keyboard operations of the computers, leading to erroneous input of data and further affecting working efficiency and accuracy.
3. Remote control requires unlocking of the computer: the use of remote software usually requires the computer to be in unlocked state, which increases the risk of data leakage and lowers the platform safety.
4. Permission cannot be divided: there are multiple windows with different permissions in the software platform. In the prior arts, it is impossible to effectively assign a different permission to each user, leading to permission conflict and potential safety hazard in the operations of users.

Therefore, there is a technical problem of failure to display and operate any running window across platforms by the software platform embedded with the interface of the joint simulation software in the prior arts.

It is to be understood that the information disclosed above in this background section is provided solely for the purpose of understanding the background of the present disclosure and shall not be construed as prior art.

### SUMMARY

The objective of the present disclosure is to provide a cross-platform interaction method and system of a desktop software in a software platform.

**In** order to solve the above technical problem, the present disclosure provides a cross-platform interaction method, including the following:
a software platform is used as a server side to construct an independent host service process at the server side, wherein the host service process provides HyperText Transfer Protocol (HTTP) service;
the host service process displays a running interface of a desktop software in a position area of a sub-window of an interface framework set by the host service process;
the host service process further sets a screen shot buffer zone for the sub-window to store a screen shot of the sub-window, and sends the screen shot of the sub-window to a client so that the screen shot of the sub-window is displayed and published by a webpage at the client;
when the screen shot displayed by the webpage is triggered, the host service process receives a trigger behavior through the client to perform an operation of the running interface corresponding to the screen shot.

In another aspect, the present disclosure provides a cross-platform interaction system, including a first computer device and a second computer device; wherein,
the first computer device is configured to include:
a host service process, configured to provide HyperText Transfer Protocol (HTTP) service and display a running interface of a desktop software in a position area of a sub-window of an interface framework set by the host service process; wherein,
the host service process is further configured to set a screen shot buffer zone for the sub-window to store a screen shot of the sub-window, and send the screen shot of the sub-window to a client so that the screen shot of the sub-window is displayed and published by a webpage at the client;
when the screen shot displayed by the webpage is triggered, the host service process receives a trigger behavior through the client to perform an operation of the running interface corresponding to the screen shot; and,
the second computer device is configured to include:
   a client, configured to receive the screen shot of the sub-window from the host service process to display and publish the screen shot by the webpage and send the trigger behavior of the screen shot displayed by the webpage to the host service process.

In a third aspect, the present disclosure provides a non-transitory computer-readable storage medium including instructions which, when executed by a processor, cause the processor to perform the foregoing cross-platform interaction method.

In a fourth aspect, the present disclosure provides an electronic device, including:
a non-transitory computer-readable storage medium;
a processor;
wherein the non-transitory computer-readable storage medium stores instructions which, when executed by the processor, cause the processor to perform the foregoing cross-platform interaction method.

In a fifth aspect, the present disclosure provides a computer program product embodied in a non-transitory computer-readable storage medium, including instructions which, when executed by a processor, cause the processor to perform the foregoing cross-platform interaction method.

In a sixth aspect, the present disclosure provides a computer device, wherein,
the computer device is configured to include:
a host service process, configured to provide HyperText Transfer Protocol (HTTP) service and display a running interface of a desktop software in a position area of a sub-window of an interface framework set by the host service process; wherein,
the host service process is further configured to set a screen shot buffer zone for the sub-window to store a screen shot of the sub-window, and send the screen shot of the sub-window to a client so that the screen shot of the sub-window is displayed and published by a webpage at the client;
when the screen shot displayed by the webpage is triggered, the host service process receives a trigger behavior through the client to perform an operation of the running interface corresponding to the screen shot.

The present disclosure has the following beneficial effects. In the cross-platform interaction method of the desktop software in the software platform, the host service process at the server side embeds the running interface of the desktop software into the software platform, and maps the software platform embedded with the running interface of the desktop software to different user platforms, so as to realize cross-platform interaction and operation at the same time. In this method, the user can access the software platform embedded with the running interface of the desktop software by, for example, smart phone, tablet computer, and working computer etc. to carry out unified management over the desktop software and software platforms. Those terminals as clients can participate in the control of the running window of corresponding function of each desktop software as long as there is a browser, effectively improving the convenience and consistency of function access of each desktop software.

Additional features and advantages of the present disclosure will be described in the following specification, and some of these will become apparent from the specification or be understood through the practice of the present disclosure. The objectives and other advantages of the present disclosure are achieved and obtained through the structures specifically outlined in the specification and drawings.

To make the above objects, features, and advantages of the present disclosure clearer and more understandable, the present disclosure will be described in detail below with reference to the preferred embodiments and drawings.

### BRIEF DESCRIPTION OF THE DRAWINGS

In order to more clearly describe the technical solutions in the embodiments of the present disclosure or in the prior arts, the drawings required for descriptions of the specific embodiments or the prior arts will be briefly introduced. Apparently, the drawings described hereunder are only some embodiments of the present disclosure. Those skilled in the arts can obtain other drawings based on these drawings without making creative work.
FIG. 1 is a step diagram illustrating a cross-platform interaction method of a desktop software in a software platform according to some embodiments of the present disclosure.
FIG. 2 is a schematic diagram illustrating a webpage locally generated by a host service process at a server side in cases involved in some embodiments.
FIG. 3 is a schematic diagram of displaying a "running interface of a desktop software "TSMasterUpgrader.exe" in an embedded way in a sub-window Upgrader" in cases involved in some embodiments.
FIG. 4 is a schematic diagram illustrating a webpage opened by a client through browser in cases involved in some embodiments.
FIG. 5 is a schematic diagram illustrating a result of depressing a button "manually check update" in a running interface of a desktop software when a webpage button "manually check update" is depressed by a user in cases involved in some embodiments.
FIG. 6 is a schematic diagram illustrating a sub-window J1939-71 and a sub-window TSMaster User Manual in cases involved in some embodiments.
FIG. 7 is a schematic diagram of displaying and publishing a webpage containing a sub-window list at a client in cases involved in some embodiments.
FIG. 8 is a schematic diagram illustrating a screen shot of a sub-window J1939-71 and a sub-window TSMaster User Manual respectively displayed and published by webpage at a client in cases involved in some embodiments.
FIG. 9 is a schematic diagram illustrating a screen shot stored into an applied-for memory space DisplayBuffer in cases involved in some embodiments.
FIG. 10 is a schematic diagram illustrating a screen shot stored into a temporary memory space TempBuffer in cases involved in some embodiments.
FIG. 11 is a schematic diagram illustrating an updated screen shot of a sub-window displayed and published by corresponding webpage at a client in cases involved in some embodiments.
FIG. 12 is a schematic diagram illustrating a request for scrolling down a mouse in a pdf file by a user in cases involved in some embodiments.
FIG. 13 is a schematic diagram illustrating a remote configuration interface of a host service process in cases involved in some embodiments.
FIG. 14 is a schematic diagram in which a host service process creates a session module corresponding to the webpage based on an access request to direct a user to enter a logging page and input user name and password for logon in cases involved in some embodiments.
FIG. 15 is a schematic diagram in which the admin user can access all windows other than "TSMaster Web Server" in cases involved in some embodiments.
FIG. 16 is a schematic diagram in which the user user can access "Global Control" and "J1939-71" windows in cases involved in some embodiments.
FIG. 17 is a principle block diagram illustrating a cross-platform interaction system of a desktop software in a software platform in cases involved in some embodiments.
FIG. 18 is a principle block diagram illustrating an electronic device in some embodiments.
FIG. 19 is a principle block diagram illustrating an electronic device in some embodiments.

### DETAILED DESCRIPTION OF THE EMBODIMENTS

In order to make the object, technical solutions and advantages of the embodiments of the present disclosure clearer, the technical solutions of the present disclosure will be fully and clearly described in combination with drawings. Apparently, the embodiments described herein are only some embodiments rather than all embodiments. All other embodiments obtained by those skilled in the art based on these embodiments without making creative work shall fall within the scope of protection of the present disclosure.

Therefore, at least one embodiment provides a cross-platform interaction method of a desktop software in a software platform, which includes the following:
a software platform is used as a server side to construct an independent host service process at the server side, where the host service process provides HyperText Transfer Protocol (HTTP) service;
the host service process displays a running interface of a desktop software in a position area of a sub-window of an interface framework set by the host service process;
the host service process further sets a screen shot buffer zone for the sub-window to store a screen shot of the sub-window, and sends the screen shot of the sub-window to a client so that the screen shot of the sub-window is displayed and published by a webpage at the client;
when the screen shot displayed by the webpage is triggered, the host service process receives a trigger behavior through the client to perform an operation of the running interface corresponding to the screen shot.

In the cross-platform interaction method of the desktop software in the software platform, the host service process at the server side embeds the running interface of the desktop software into the software platform, and maps the software platform embedded with the running interface of the desktop software to different user platforms, so as to realize cross-platform interaction and operation at the same time. Furthermore, different window functions can be divided based user permission. In this method, the user can access the software platform embedded with the running interface of the desktop software by, for example, smart phone, tablet computer, and working computer etc. to carry out unified management over the desktop software and software platforms. Those terminals as clients can participate in the control of the running window of corresponding function of each desktop software as long as there is a browser, effectively improving the convenience and consistency of function access of each desktop software.

Various non-limiting implementations of the embodiments of the present disclosure will be detailed below in combination with drawings.

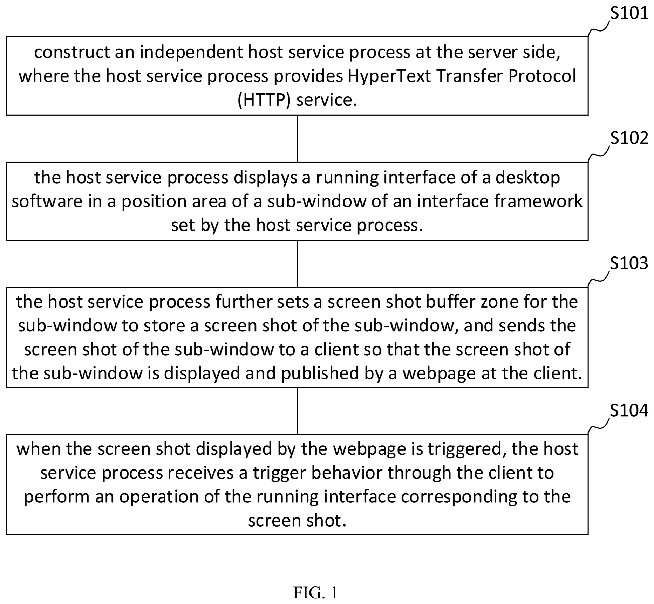

As shown in FIG. 1, some embodiments provide a cross-platform interaction method of a desktop software in a software platform, which includes the following steps.

At step S101, a software platform is used as a server side to construct an independent host service process at the server side, where the host service process provides HyperText Transfer Protocol (HTTP) service.

At step S102, the host service process displays a running interface of a desktop software in a position area of a sub-window of an interface framework set by the host service process.

At step S103, the host service process further sets a screen shot buffer zone for the sub-window to store a screen shot of the sub-window, and sends the screen shot of the sub-window to a client so that the screen shot of the sub-window is displayed and published by a webpage at the client.

At step S104, when the screen shot displayed by the webpage is triggered, the host service process receives a trigger behavior through the client to perform an operation of the running interface corresponding to the screen shot.

Specifically, the independent host service process refers to that the host service process can operate independently, for example, an executable document with suffix exe in Windows can be executed by double click without loading and executing by another program.

Specifically, the publishing refers to that the host service process enables HTTP service and starts to monitor HTTP port.

Specifically, the server side in the embodiment is, for example, but not limited to, an independently-developed software platform similar in function to MATLAB software platform of MATHWORKS or a computer device end of the software platforms such as an independently-developed vehicle tool chain similar in function to Vector CANoe software or the like.

Specifically, the desktop software refers to an application program software installed and run on the desktop of the personal computers (e.g. tabletop computer and laptop computer). The desktop software in this embodiment refers to a software for executing a specific command or implementing a specific function, for example, vehicle dynamics simulation software, office software (Word, Excel) for file editing and data processing, and image processing software (Photoshop) for image designing and editing and the like.

Specifically, the interactivity between different desktop software is generally weak, which requires the users to perform manual switching and data transmission among different software. The software platform is a more comprehensive and more open system, which provides a basic architecture and environment to allow the users to develop various types of application programs or services thereon, showing strong expandability and compatibility. For example, the Windows operating system is a software platform which supports the operation of a huge number of various types of software, including office software, games, design software etc. and provides a unified interface and service, facilitating interaction between software and hardware and between software.

The cross-platform interaction in this embodiment is an interaction between the desktop software and the software platform.

The process of the cross-platform interaction method of the desktop software in the software platform will be detailed below in combination with case.

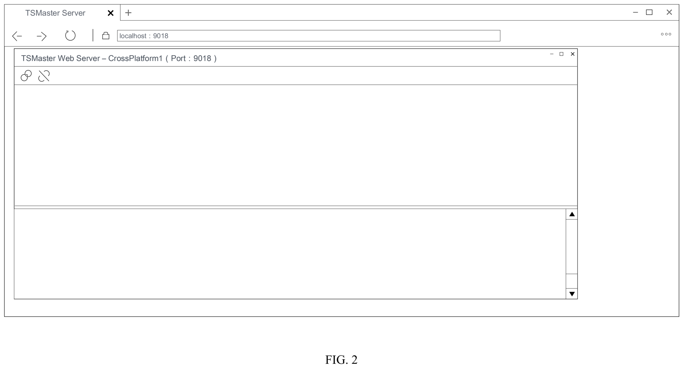

In this embodiment, taking TSMaster software platform as server side, an independent host service process TSMaster64.exe is constructed at the server side, and the host service process provides HTTP service through 9018 port. The user can open the webpage as shown in FIG. 2 by opening a browser on any device capable of browsing the webpages and inputting "http://localhost:9018/" in an address bar.

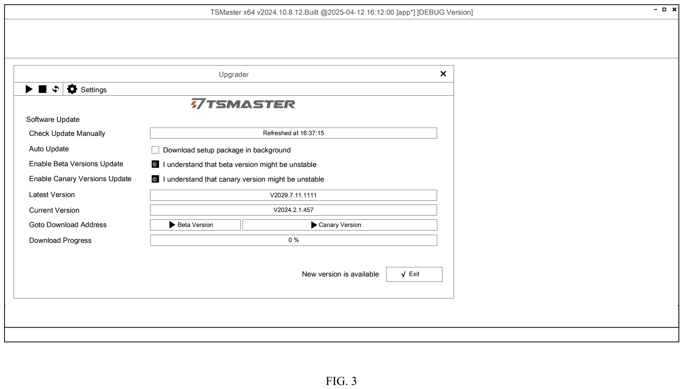

The host service process displays a running interface of a desktop software in a position area of a sub-window of an interface framework set by the host service process. As shown in FIG. 3, the sub-window Upgrader displays in an embedded way the running interface of the desktop software "TSMasterUpgrader.exe".

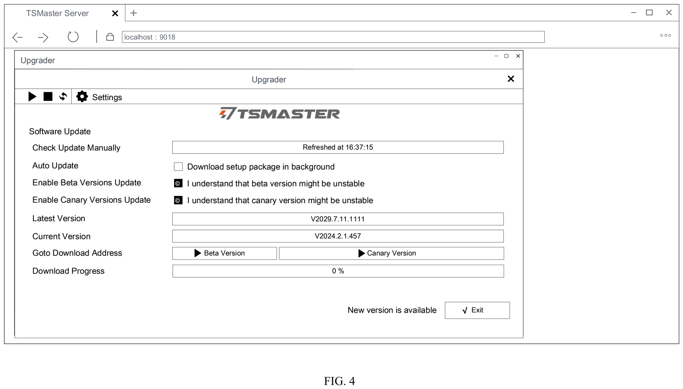

The host service process sets a screen shot buffer zone for the sub-window Upgrader to store a screen shot of the sub-window, and sends the screen shot of the sub-window to a client so that the screen shot of the sub-window is displayed and published by a webpage at the client. When the user opens a webpage by browser, the user can see the screen shot window published by the webpage, as shown in FIG. 4.

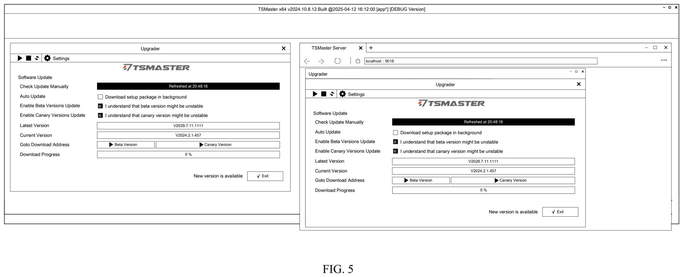

When the user performs mouse click or keyboard operation in the webpage window, the screen shot displayed by the webpage can be triggered, and the host service process receives a trigger behavior through the client to perform an operation of the running interface corresponding to the screen shot. For example, when the user clicks the button "manually check update" in the webpage, the host service process obtains the event that the button is depressed, and automatically performs click operation on the corresponding button in the running interface of the desktop software "TSMasterUpgrader.exe". As shown in FIG. 5, when the webpage button "manually check update" is depressed by the user, the button "manual check update" in the running interface of the desktop software is also depressed.

In some embodiments, when there are N sub-windows, the N sub-windows respectively correspond to multiple running interfaces of the desktop software; the host service process obtains relevant information of each sub-window, and generates a webpage containing a sub-window list based on the relevant information so that the webpage containing the sub-window list is displayed and published at the client; the selected sub-windows are fed back to the host service process, and the host service process sets respective screen shot buffer zones for the selected sub-windows to store the screen shot of each sub-window, and sends the screen shot of each sub-window to the client and then the screen shot of each sub-window is displayed and published by the webpage at the client.

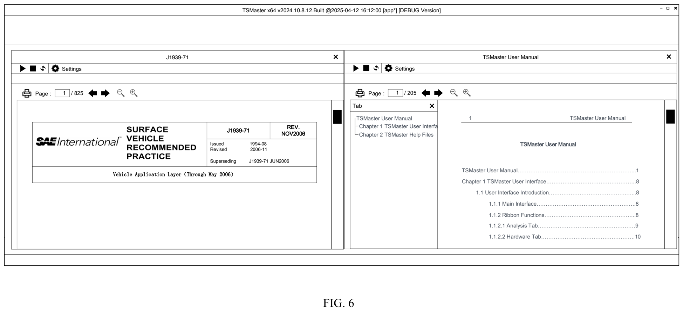

For example, in some embodiments, there are two sub-windows which respectively correspond to multiple running interfaces of an external PDF viewer software: J1939-71 and TSMaster User Manual, as shown in FIG. 6.

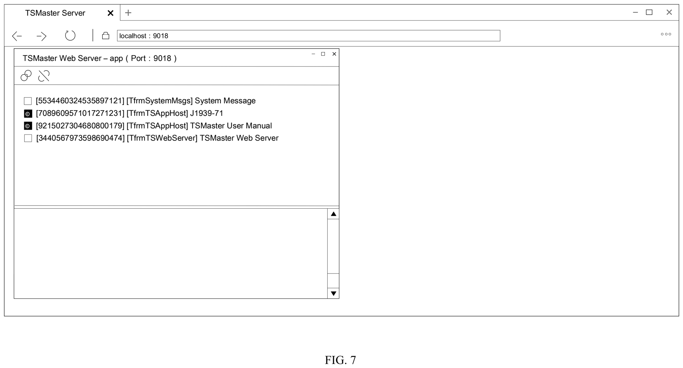

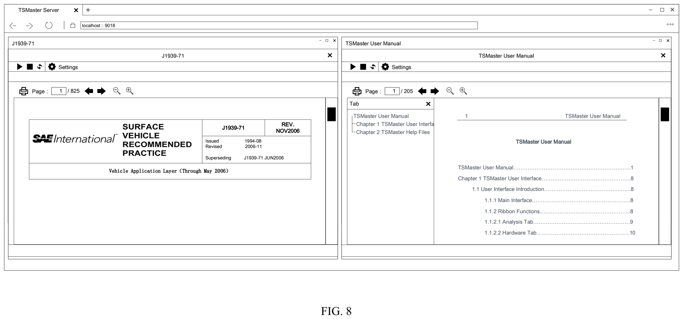

The host service process obtains relevant information of each sub-window, and generates a webpage containing a sub-window list based on the relevant information so that the webpage containing the sub-window list is displayed and published at the client. As shown in FIG. 7, the client displays a webpage containing a list of a sub-window J1939-71 and a sub-window TSMaster User Manual. If the user ticks the two sub-windows at the same time, the selected sub-windows are fed back to the host service process, and the host service process sets respective screen shot buffer zones for the selected sub-windows J1939-71 and TSMaster User Manual to respectively store the screen shots of the two sub-windows, and sends the screen shots of the two sub-windows to the client and then the screen shots of the two sub-windows are respectively displayed and published by webpage at the client as shown in FIG. 8.

In some embodiments, the cross-platform interaction method of the desktop software in the software platform further includes the following: the host service process applies for a memory space and sets an update flag at the server side based on size information of the sub-window, and stores the screen shot of the sub-window into the applied-for memory space; the host service process obtains the screen shot of the sub-window at a first cycle and stores the screen shot of the sub-window into a temporary memory space; whether contents stored in the applied-for memory space and the temporary memory space are the same is determined by comparison to determine whether to update the screen shot of the sub-window; if the contents of the applied-for memory space and the temporary memory space are different, the screen shot stored in the temporary memory space overwrites the original screen shot in the applied-for memory space; the client obtains the update flag from the server side at a second cycle; if update is present, the client obtains the screen shot in the applied-for memory space from the server side so that the updated screen shot of the sub-window is displayed and published by corresponding webpage at the client.

Specifically, the temporary memory space refers to a space for comparing the screen shot images, and can be recovered after comparison, with contents therein discarded.

In some embodiments, the relevant information of the sub-window includes position information, class name and name of window.

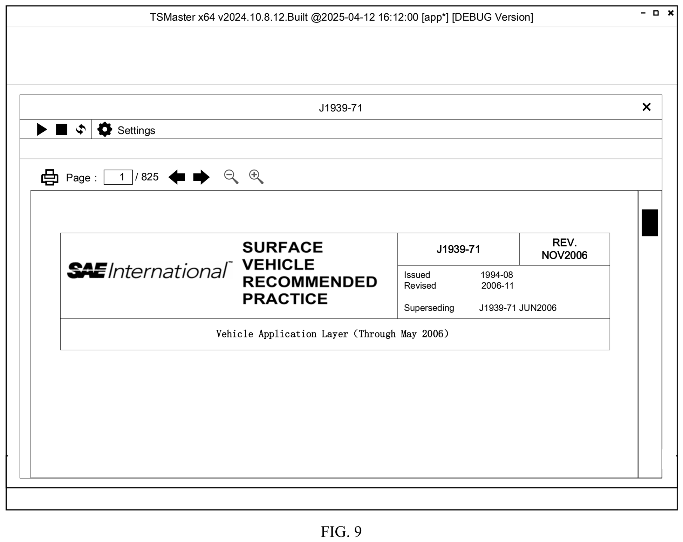

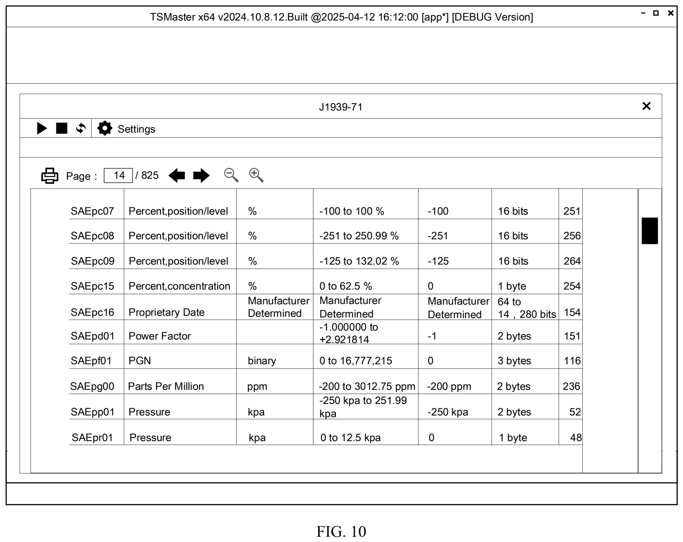

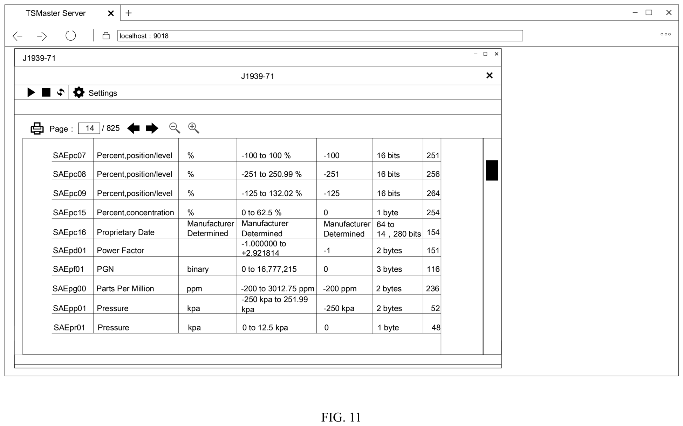

Taking the sub-window J1939-71 as example, the host service process applies for a memory space DisplayBuffer and sets an update flag UpdatedToken at the server side based on width, height and pixels per inch (PPI) information of the sub-window J1939-71 and stores the screen shot of the sub-window J1939-71 into the applied-for memory space DisplayBuffer, for example, the screen shot shown in FIG. 9 is stored into the applied-for memory space; the host service process obtains the screen shot of the sub-window J1939-71 at a first cycle, and stores the screen shot into one temporary memory space TempBuffer, for example, the screen shot shown in FIG. 10 is stored into the temporary memory space TempBuffer; whether the contents of the applied-for memory space DisplayBuffer and the temporary memory space TempBuffer are the same is determined by comparison to determine whether to update the screen shot of the sub-window J1939-71; if same, update is not required; if different, the screen shot stored in the temporary memory space TempBuffer overwrites the original screen shot in the applied-for memory space DisplayBuffer. As shown in FIGS. 9 and 10, it can be known that change in display occurs to the pdf file in the sub-window J1939-71 due to wheel rolling. Then, the screen shot in the temporary memory space TempBuffer overwrites the original screen shot in the applied-for memory space DisplayBuffer, that is, at this time, present in the the applied-for memory space DisplayBuffer is the screen shot shown in FIG. 10. When the client obtains the update flag from the server side at a second cycle, if update is present, the client obtains the updated screen shot of the applied-for memory space DisplayBuffer from the server side so that the updated screen shot of the sub-window is displayed and published by corresponding webpage at the client, as shown in FIG. 11.

In some embodiments, a method in which, when the screen shot displayed by the webpage is triggered, the host service process receives a trigger behavior to perform an operation of the running interface corresponding to the screen shot, includes the following: the host service process feeds a trigger position or trigger instruction on the webpage back to the screen shot of the sub-window in the host service process based on the obtained trigger behavior, and maps the trigger behavior to the running interface to perform corresponding operation.

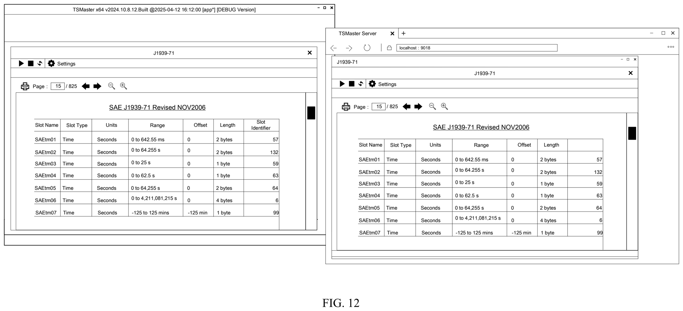

Further taking the sub-window J1939-71 as example, when the user scrolls the pdf file by mouse wheel at the webpage end to view the contents downward, the screen shot displayed by webpage is triggered by mouse wheel, and the host service process obtains a rolling distance of the mouse wheel WheelDelta=-120 and a mouse position MousePos=(350,120); the host service process feeds the mouse wheel behavior and the mouse position back to the screen shot of the sub-window J1939-71 in the host service process, namely, the mouse position is set to a coordinate point of offset x=350 and offset y=120 in the screen shot, and scrolled down a distance =120 by simulating mouse wheel and mapped to the pdf file, so as to satisfy the request of the user to scroll down the mouse in the pdf file, as shown in FIG. 12.

In some embodiments, a method in which, the host service process obtains the relevant information of each sub-window, and based on the relevant information, generates a webpage containing a sub-window list so that the webpage containing the sub-window list is displayed and published at the client, includes the following: the client sends a webpage access request to the host service process; the host service process creates a session module corresponding to the webpage based on the access request; the session module screens the sub-window list of the host service process based on permission information to display and publish the screened sub-window list.

With specific case, detailed descriptions are made to the method in which the client sends a webpage access request to the host service process; the host service process creates a session module corresponding to the webpage based on the access request; the session module screens the sub-window list of the host service process based on permission information to display and publish the screened sub-window list:

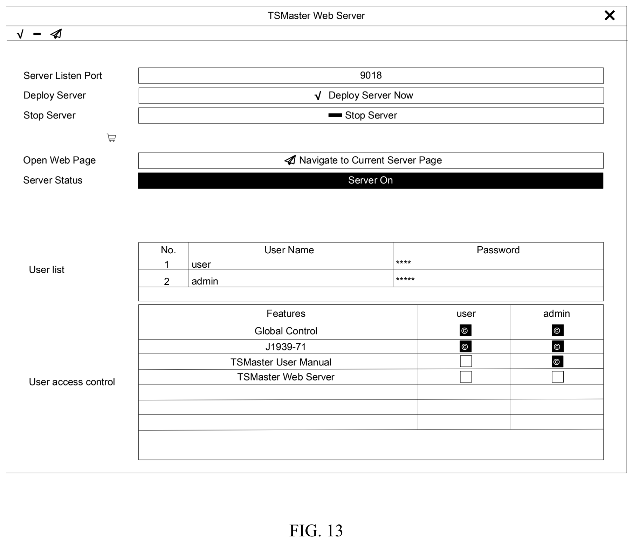

In the remote configuration interface of the host service process, the function "activate user permission" is ticked to edit a user list and a user permission control list. In the user list, users can be added or removed and a password for each user is configured; in the user permission control list, each window is displayed and accessibility of each user for the window can be ticked at the right. For example, the user user is only allowed to access the "J1939-71" and the "TSMaster User Manual", and the admin user is allowed to access all windows other than "TSMaster Web Server", as shown in FIG. 13.

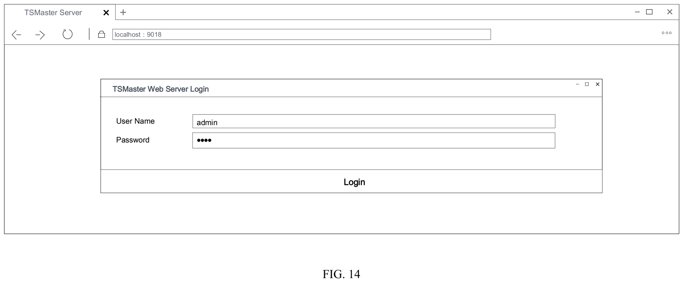

After the host service process is constructed, the host service process can obtain preconfigured permission information of all users. When a user logs through webpage, the host service process creates a session module corresponding to the webpage based on the access request to direct the user to enter a logging page, and input username and password for logging, as shown in FIG. 14.

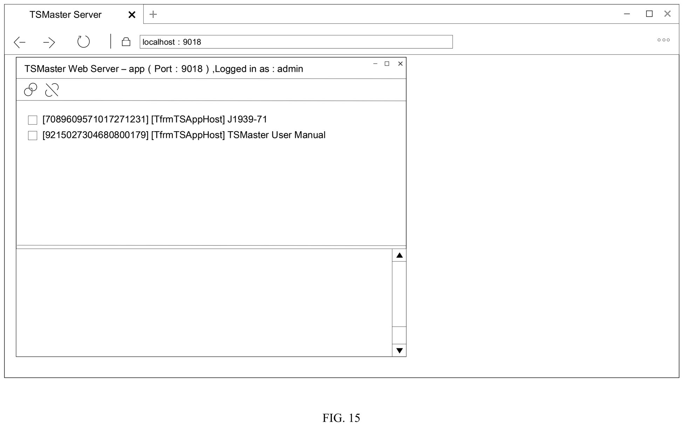

After the user successfully logs, the session module obtains the name of the current user and the permission configuration of the user. If the user logs with admin user, the session module screens the sub-window list of the host service process based on the user permission information and displays the screened sub-window list at the client. Based on the permission configuration, the user can access all windows other than "TSMaster Web Server", as shown in FIG. 15.

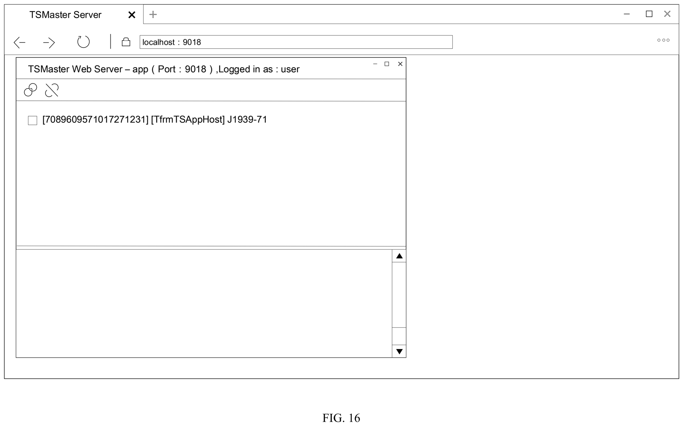

If the user user logs based on the permission configuration, the user can only access the windows "Global Control" and "J1939-71", where the "Global Control" is a window list, as shown in FIG. 16.

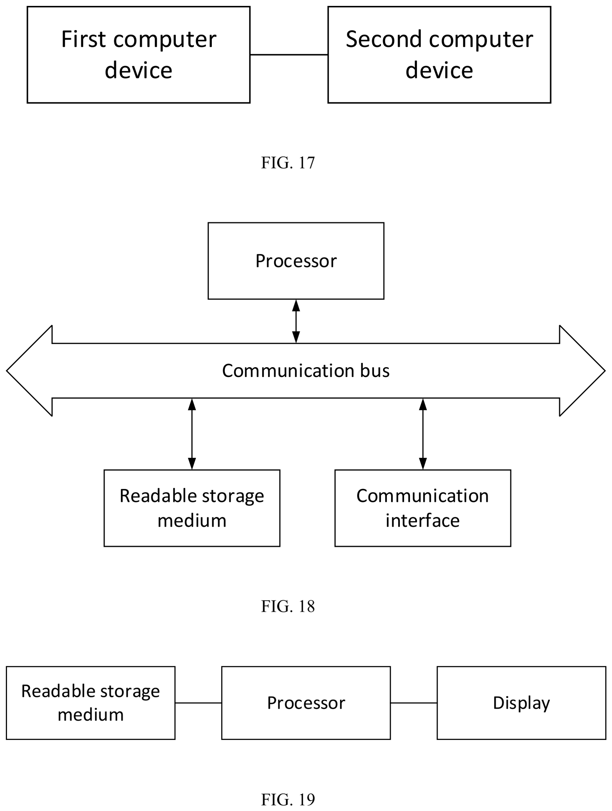

As shown in FIG. 17, some embodiments further provide a cross-platform interaction system, which includes a first computer device and a second computer device, where,
the first computer device is further configured to include:
a host service process, configured to provide HyperText Transfer Protocol (HTTP) service and display a running interface of a desktop software in a position area of a sub-window of an interface framework set by the host service process; where,
the host service process is further configured to set a screen shot buffer zone for the sub-window to store a screen shot of the sub-window, and send the screen shot of the sub-window to a client so that the screen shot of the sub-window is displayed and published by a webpage at the client;
when the screen shot displayed by the webpage is triggered, the host service process receives a trigger behavior through the client to perform an operation of the running interface corresponding to the screen shot; and,
the second computer device is configured to include:
   a client, configured to receive the screen shot of the sub-window from the host service process to display and publish the screen shot by the webpage and send the trigger behavior of the screen shot displayed by the webpage to the host service process.

The specific implementation functions of the host service process and the client are implemented in the first and second computer devices, and for details, reference can be made to the contents of the above cross-platform interaction method of the desktop software in the software platform and no redundant descriptions are made herein.

From the perspective of hardware processing, the electronic device in the embodiments of the present disclosure will be described below.

The embodiments of the present disclosure do not constitute any limitation to the specific implementation of the electronic device.

As shown in FIG. 18, some embodiments further provide an electronic device, which includes a processor, a readable storage medium, a communication bus, and a communication interface, where communication among the processor, the readable storage medium and the communication interface is carried out by the communication bus; the readable storage medium is configured to store programs for performing the cross-platform interaction method of the desktop software in the software platform, and the programs cause the processor to perform the operations corresponding to the cross-platform interaction method.

As shown in FIG. 19, some embodiments further provide an electronic device, which includes:
a processor, a display communicating with the processor to present a webpage, and a readable storage medium; where,
the readable storage medium is configured to store instruction programs;
the processor is configured to execute the instruction programs to perform the following operations:
   a software platform is used as a server side to construct an independent host service process at the server side, where the host service process provides HyperText Transfer Protocol (HTTP) service;
   the host service process displays a running interface of a desktop software in a position area of a sub-window of an interface framework set by the host service process;
   the host service process further sets a screen shot buffer zone for the sub-window to store a screen shot of the sub-window, and sends the screen shot of the sub-window to a client so that the screen shot of the sub-window is displayed and published by a webpage at the client;
   when the screen shot displayed by the webpage is triggered, the host service process receives a trigger behavior through the client to perform an operation of the running interface corresponding to the screen shot;
   the display is configured to display corresponding sub-window.

In some embodiments, a computer device (e.g., an industrial personal computer (IPC)) may be one type of electronic device and may serve as a server.

FIGS. 18 and 19 show a schematic structural view of an electronic device, provided for illustration only and not intended to limit the electronic device. The electronic device may include fewer or more components than those shown, may combine components, or may employ different component arrangements.

In some embodiments, the communication interface may include physical interfaces such as RS-232, RS-485, and USB (including Type-C) for connecting external devices or bus adapters. The communication interface may further include wired network interfaces such as Ethernet and/or wireless network interfaces such as Wi-Fi and Bluetooth, for establishing communication links between the computer device and other electronic devices.

In some embodiments, examples of the non-transitory computer-readable storage medium include, without limitation, flash memory, hard disk drives, magnetic memory, magnetic disks, optical disks, and card-type memory (e.g., MultiMediaCard (MMC), Secure Digital (SD) memory, etc.). In certain embodiments, the storage medium may be an internal storage unit of the computer device, such as a built-in hard disk drive; in other embodiments, it may be an external storage device, such as a pluggable hard disk drive, a SmartMedia card (SMC), an SD card, or a flash memory card. Furthermore, the storage medium may include both an internal storage unit and an external storage device at the same time. The storage medium may be used to store application software installed on the computer device and various data (e.g., computer program code), and to temporarily store data that have been or are to be output.

In some embodiments, the processor may be a central processing unit (CPU), a controller, a microcontroller, a microprocessor, or another data-processing chip, and is configured to execute program code stored in the storage medium and/or to process data (e.g., to execute a computer program).

In some embodiments, the communication bus may be an input/output (I/O) bus, such as a Peripheral Component Interconnect (PCI) bus or an Extended Industry Standard Architecture (EISA) bus. The bus may be divided into an address bus, a data bus, and a control bus.

Optionally, the computer device further includes a user interface. The user interface may include a display, an input unit (e.g., a keyboard), and standard wired and/or wireless interfaces. Optionally, the display (or display module) may be a light-emitting diode (LED) display, a liquid crystal display (LCD), a touchscreen LCD, or an organic light-emitting diode (OLED) display. The display (or display module), also referred to as a display screen or display unit, is used to present information processed by the computer device and to provide a visual user interface.

The processor executes the programs to perform the steps in the embodimentts of the cross-platform interaction method of the desktop software in the software platform shown in FIG. 1. Alternatively, the processor executes computer programs to implement the functions of each module or unit in each apparatus embodiment.

Some embodiments further provide a readable storage medium, storing computer readable instructions thereon; the instructions are executed by at least one processor to perform the cross-platform interaction method of the desktop software in the software platform; the cross-platform interaction method of the desktop software in the software platform includes the following: a software platform is used as a server side to construct an independent host service process at the server side, where the host service process provides HyperText Transfer Protocol (HTTP) service;
the host service process displays a running interface of a desktop software in a position area of a sub-window of an interface framework set by the host service process;
the host service process further sets a screen shot buffer zone for the sub-window to store a screen shot of the sub-window, and sends the screen shot of the sub-window to a client so that the screen shot of the sub-window is displayed and published by a webpage at the client;
when the screen shot displayed by the webpage is triggered, the host service process receives a trigger behavior through the client to perform an operation of the running interface corresponding to the screen shot.

Some embodiments further provide a computer readable storage medium, storing computer readable instructions; the instructions are executed by at least one processor to perform the above cross-platform interaction method which specifically includes the following:
a software platform is used as a server side to construct an independent host service process at the server side, where the host service process provides HyperText Transfer Protocol (HTTP) service;
the host service process displays a running interface of a desktop software in a position area of a sub-window of an interface framework set by the host service process;
the host service process further sets a screen shot buffer zone for the sub-window to store a screen shot of the sub-window, and sends the screen shot of the sub-window to a client so that the screen shot of the sub-window is displayed and published by a webpage at the client;
when the screen shot displayed by the webpage is triggered, the host service process receives a trigger behavior through the client to perform an operation of the running interface corresponding to the screen shot.

Reference can be made to the specific descriptions of the cross-platform interaction method of the desktop software in the software platform and no redundant descriptions are made herein.

Some embodiments further provide a computer program product, which includes programs or instructions, where the programs or instructions are executed on a computer to perform the cross-platform interaction method of the desktop software in the software platform; the cross-platform interaction method of the desktop software in the software platform includes the following: a software platform is used as a server side to construct an independent host service process at the server side, where the host service process provides HyperText Transfer Protocol (HTTP) service;
the host service process displays a running interface of a desktop software in a position area of a sub-window of an interface framework set by the host service process;
the host service process further sets a screen shot buffer zone for the sub-window to store a screen shot of the sub-window, and sends the screen shot of the sub-window to a client so that the screen shot of the sub-window is displayed and published by a webpage at the client;
when the screen shot displayed by the webpage is triggered, the host service process receives a trigger behavior through the client to perform an operation of the running interface corresponding to the screen shot.

Some embodiments further provide a computer program product, which includes a readable storage medium storing readable program codes thereon; the readable program codes include instructions which cause at least one processor (one or more computer devices) to perform the following operations:
a software platform is used as a server side to construct an independent host service process at the server side, where the host service process provides HyperText Transfer Protocol (HTTP) service;
the host service process displays a running interface of a desktop software in a position area of a sub-window of an interface framework set by the host service process;
the host service process further sets a screen shot buffer zone for the sub-window to store a screen shot of the sub-window, and sends the screen shot of the sub-window to a client so that the screen shot of the sub-window is displayed and published by a webpage at the client;
when the screen shot displayed by the webpage is triggered, the host service process receives a trigger behavior through the client to perform an operation of the running interface corresponding to the screen shot.

It should be understood that, in several embodiments provided in the present disclosure, the disclosed apparatuses and methods may also be implemented in other ways. The foregoing apparatus embodiments are merely illustrative. For example, the flowcharts and block diagrams in the drawings depict possible system architectures, functions, and operations for apparatuses, methods, and computer program products according to multiple embodiments of the present disclosure. In this regard, each block in the flowcharts or block diagrams may represent a module, a program segment, or a portion of code including one or more executable instructions for implementing specified logical functions. It should also be noted that, in some alternative implementations, the functions indicated in the blocks may occur in an order different from that shown in the drawings. For instance, two consecutive blocks may be executed substantially concurrently and, at times, in the reverse order, depending on the functions involved. Furthermore, it should be noted that each block in the block diagrams and/or flowcharts, as well as combinations of blocks in the block diagrams and/or flowcharts, may be implemented by a special-purpose hardware-based system configured to perform the specified functions or acts, or by a combination of special-purpose hardware and computer instructions.

Additionally, in the embodiments of the present disclosure, the organization of the functional modules may be selected flexibly: all modules may be integrated into a single standalone unit, the modules may exist independently of one another, or at least two modules may be integrated to form a standalone unit.

When the foregoing function is implemented as a software functional module and is sold or used as a standalone product, it may be stored on a non-transitory computer-readable storage medium. In view of this, the overall technical solution of the present disclosure, as well as portions thereof that constitute improvements over the prior art, can be embodied as a software product. The software product is stored on the above storage medium and includes instructions which, when executed, cause a computer device (e.g., a personal computer, a server, or a network device) to perform some or all of the steps of the methods described in the embodiments of the present disclosure.

Based on the foregoing description of the preferred embodiments of the present disclosure, various changes and modifications may be made by those skilled in the art without departing from the technical spirit of the present disclosure. The technical scope of the present disclosure is not limited by the specification and should be determined by the scope of the claims.

## Claims

1. A cross-platform interaction method, comprising the following:
using a software platform as a server side to construct an independent host service process at the server side, wherein the host service process provides a HyperText Transfer Protocol (HTTP) service;
displaying, by the host service process, a running interface of a desktop software in a position area of a sub-window of an interface framework set by the host service process;
further setting, by the host service process, a screen shot buffer zone for the sub-window to store a screen shot of the sub-window, and sending the screen shot of the sub-window to a client so that the screen shot of the sub-window is displayed and published by a webpage at the client; and
when the screen shot displayed by the webpage is triggered, receiving, by the host service process, a trigger behavior through the client to perform an operation of the running interface corresponding to the screen shot.

2. The cross-platform interaction method according to claim 1, comprising the following:
when there are N sub-windows, the N sub-windows respectively correspond to multiple running interfaces of the desktop software;
the host service process obtains relevant information of each sub-window, and generates a webpage containing a sub-window list based on the relevant information so that the webpage containing the sub-window list is displayed and published at the client; and
the selected sub-windows are fed back to the host service process, and the host service process sets respective screen shot buffer zones for the selected sub-windows to store the screen shot of each sub-window, and sends the screen shot of each sub-window to the client and then the screen shot of each sub-window is displayed and published by the webpage at the client.

3. The cross-platform interaction method according to claim 1, further comprising the following:
the host service process applies for a memory space and sets an update flag at the server side based on size information of the sub-window, and stores the screen shot of the sub-window into the applied-for memory space;
the host service process obtains the screen shot of the sub-window at a first cycle and stores the screen shot of the sub-window into a temporary memory space;
whether contents stored in the applied-for memory space and the temporary memory space are same is determined by comparison to determine whether to update the screen shot of the sub-window;
if the contents of the applied-for memory space and the temporary memory space are different, the screen shot stored in the temporary memory space overwrites the original screen shot in the applied-for memory space; and
the client obtains the update flag from the server side at a second cycle; if update is present, the client obtains the screen shot in the applied-for memory space from the server side so that the updated screen shot of the sub-window is displayed and published by corresponding webpage at the client.

4. The cross-platform interaction method according to claim 1, wherein,
a method in which, when the screen shot displayed by the webpage is triggered, the host service process receives a trigger behavior to perform an operation of the running interface corresponding to the screen shot, comprises the following:
the host service process feeds a trigger position or trigger instruction on the webpage back to the screen shot of the sub-window in the host service process based on the trigger behavior, and maps the trigger behavior to the running interface to perform corresponding operation.

5. The cross-platform interaction method according to claim 1, wherein,
the relevant information of the sub-window comprises position information, class name and name of window.

6. The cross-platform interaction method according to claim 1, wherein,
a method in which, the host service process obtains the relevant information of each sub-window, and based on the relevant information, generates a webpage containing a sub-window list so that the webpage containing the sub-window list is displayed and published at the client, comprises the following:
the client sends a webpage access request to the host service process;
the host service process creates a session module corresponding to the webpage based on the webpage access request; and
the session module screens the sub-window list of the host service process based on permission information to display and publish the screened sub-window list.

7. A non-transitory computer-readable storage medium comprising instructions, wherein when executed by a processor, the instructions allow the processor to perform the cross-platform interaction method of any of claims 1-6.

8. An electronic device, comprising:
a non-transitory computer-readable storage medium;
a processor;
wherein the non-transitory computer-readable storage medium stores instructions, wherein when executed by the processor, the instructions allow the processor to perform the cross-platform interaction method of any of claims 1-6.

9. A computer program product embodied in a non-transitory computer-readable storage medium, comprising instructions, wherein when executed by a processor, the instructions allow the processor to perform the cross-platform interaction method of any of claims 1-6.

10. A computer device, wherein,
the computer device is configured to comprise:
a host service process, configured to provide a HyperText Transfer Protocol (HTTP) service and display a running interface of a desktop software in a position area of a sub-window of an interface framework set by the host service process; wherein,
the host service process is further configured to set a screen shot buffer zone for the sub-window to store a screen shot of the sub-window, and send the screen shot of the sub-window to a client so that the screen shot of the sub-window is displayed and published by a webpage at the client; and
when the screen shot displayed by the webpage is triggered, the host service process receives a trigger behavior through the client to perform an operation of the running interface corresponding to the screen shot.

11. The computer device according to claim 10, wherein,
the computer device is further configured such that:
when there are N sub-windows, the N sub-windows respectively correspond to multiple running interfaces of the desktop software;
the host service process obtains relevant information of each sub-window and based on the relevant information, generates a webpage containing a sub-window list so that the webpage containing the sub-window list is displayed and published at the client; and
the selected sub-windows are fed back to the host service process, and the host service process sets respective screen shot buffer zones for the selected sub-windows to respectively store the screen shot of each sub-window, and sends the screen shot of each sub-window to the client and then the screen shot of each sub-window is displayed and published by the webpage at the client.

12. The computer device according to claim 10, wherein,
the computer device is further configured such that:
the host service process applies for a memory space and sets an update flag at a server side based on size information of the sub-window and stores the screen shot of the sub-window into the applied-for memory space;
the host service process obtains the screen shot of the sub-window at a first cycle, and stores the screen shot into a temporary memory space;
whether contents stored in the applied-for memory space and the temporary memory space are same is determined by comparison to determine whether to update the screen shot of the sub-window;
if the contents of the applied-for memory space and the temporary memory space are different, the screen shot stored in the temporary memory space overwrites the original screen shot in the applied-for memory space; and
the client obtains the update flag from the server side at a second cycle; if update is present, the client obtains the screen shot in the applied-for memory space from the server side so that the updated screen shot of the sub-window is displayed and published by corresponding webpage at the client.

13. The computer device according to claim 10, wherein,
the computer device is further configured such that:
a method in which, when the screen shot displayed by the webpage is triggered, the host service process receives the trigger behavior to perform the operation of the running interface corresponding to the screen shot, comprises the following:
the host service process feeds a trigger position or trigger instruction on the webpage back to the screen shot of the sub-window in the host service process based on the trigger behavior, and maps the trigger behavior to the running interface to perform corresponding operation.

14. The computer device according to claim 10, wherein,
the computer device is further configured such that:
a method in which, the host service process obtains the relevant information of each sub-window, and based on the relevant information, generates a webpage containing a sub-window list so that the webpage containing the sub-window list is displayed and published at the client, comprises the following:
the client sends a webpage access request to the host service process;
the host service process creates a session module corresponding to the webpage based on the webpage access request; and
the session module screens the sub-window list of the host service process based on permission information to display and publish the screened sub-window list.

15. A cross-platform interaction system, comprising a first computer device and a second computer device; wherein,
taking the computer device of any of claims 10-14 as the first computer device; and,
the second computer device is configured to comprise:
the client, configured to receive the screen shot of the sub-window from the host service process to display and publish the screen shot by the webpage and send the trigger behavior of the screen shot displayed by the webpage to the host service process.
